# FASCICULE DE BREVET EUROPEEN

(11) **EP 0 788 461 B1**
(45) Date de publication et mention de la délivrance du brevet: **01.03.2000**
(21) Numéro de dépôt: 95918654.5
(22) Date de dépôt: 28.04.1995
(51) Int. Cl.: C02F 1/28

(54) **AGENT DE CAPTATION DE CATIONS DE METAUX LOURDS COMPRENANT UN COMPOSE DU TYPE SILICATE OU ALUMINOSILICATE ET UN COMPOSE DU TYPE CARBONATE**
FANGMITTEL FÜR SCHWERMETALLKATIONEN, WELCHE EIN BESTANDTEIL VOM TYP SILIKATE ODER ALUMINIUMSILIKATE UND EIN BESTANDTEIL VOM TYP KARBONATE ENTHÄLT
HEAVY METAL CATION RECOVERING AGENT INCLUDING A SILICATE OR ALUMINOSILICATE TYPE COMPOUND AND A CARBONATE TYPE COMPOUND

(30) Priorité: 29.04.1994 FR 9405215
(43) Date de publication de la demande: 13.08.1997
(73) Titulaire: RHODIA CHIMIE, 92408 Courbevoie Cédex (FR)
(72) Inventeur: CHANE-CHING, Jean-Yves, F-95600 Eaubonne (FR); MOTTOT, Yves, F-93290 Tremblay-en-France (FR)
(74) Mandataire: Delenne, Marc
(86) Numéro de dépôt international: FR9500557
(87) Numéro de publication internationale: WO9529875

(56) Documents cités:
- EP-A- 0 410 877
- EP-A- 0 533 205
- US-A- 4 256 587
- US-A- 4 752 397
- US-A- 4 765 908
- DATABASE WPI Section Ch, Week 8701 Derwent Publications Ltd., London, GB; Class D15, AN 87-003629 & JP-A-61 263 636 (UBE INDUSTRIES) , 21 Novembre 1986
- DATABASE WPI Section Ch, Week 8716 Derwent Publications Ltd., London, GB; Class D15, AN 87-113114 & JP-A-62 059 519 (TATSUYA) , 16 Mars 1987

## Description

La présente invention concerne un agent de captation de cations de métaux lourds contenus dans un milieu, notamment un effluent aqueux.

Elle est également relative à un agent de stabilisation desdits cations de métaux lourds.

L'incinération des déchêts est soumise à un cadre réglementaire assez strict.

La législation dans le domaine des rejets des métaux lourds, dans le milieu naturel, est en particulier en pleine évolution. Les eaux de lavage (ou d'épuration) des fumées d'usines d'incinération de déchêts notamment d'ordures ménagères ou de déchêts industriels, d'effluents industriels du type effluents soufrés, par exemple les acides sulfuriques usés, sont des milieux contenant des cations de métaux lourds. De même, certains sols sont pollués par la présence de tels cations.

Ainsi, dans le domaine des eaux de lavage des fumées d'usines d'incinération de déchêts, par exemple d'ordures ménagères, un procédé classique d'élimination des cations de métaux lourds consiste en une précipitation basique effectuée à la chaux, assistée d'une finition à l'aide d'un agent précipitant à base de soufre ; l'étape de décantation/séparation qui suit est généralement améliorée par l'incorporation d'un agent floculant.

Mais ce procédé présente un certain nombre d'inconvénients.

En particulier, un volume très important de boue est généré par la précipitation à la chaux ; cette boue, après filtration et compaction sous forme de galette, doit être actuellement placée dans des décharges particulières.

De plus, l'utilisation de matières organiques, comme l'agent précipitant à base de soufre et l'agent de floculation, qui se retrouvent au moins en partie dans la galette, nuit à la mise en décharge (dégradation avec formation de gaz réducteurs au cours du temps).

Enfin, la composition de boue obtenue peut être difficile à stabiliser (ou immobiliser) par les techniques actuelles. La présence de calcium en quantité importante dans cette boue peut inhiber fortement les opérations de stabilisation (ou immobilisation), comme par exemple la stabilisation par vitrification. Or, les futures réglementations relatives au stockage des déchêts spéciaux ultimes rendent nécessaire la stabilisation (ou immobilisation) de la galette, avant admission sur le site de stockage, afin de réduire très sensiblement la lixiviation de ce type de déchêt.

EP-A-0410877 décrit une composition de matière pour l'épuration chimique et biologique d'eaux polluées, cette composition comprenant, sous forme granulaire, un carbonate de calcium poreux et un silicate d'alumine hydraté renfermant des métaux alcalino-terreux.

Un procédé de purification de solutions aqueuses contenant des métaux lourds par passage à travers de l'hydrotalcite activée est enseigné dans le brevet US-A-4752397.

US-A-4765908 divulgue une composition pour éliminer des polluants contenus dans des eaux usées, cette composition pouvant contenir un silicate de magnésium.

Une composition solide, contenant du marbre et/ou du granite respectivement à base de CaO et de SiO₂ et utilisable pour éliminer des polluants d'un milieu aqueux, est décrite dans le document EP-A-0533205.

Un agent de traitement des eaux, à base de silicate de calcium, est mentionné dans Database WPI - AN 97-003629 (JP-A-61263636).

Le document Database WPI - AN 97-113114 (JP-A-62059519) enseigne l'emploi pour l'élimination de métaux lourds, par échange/absorption, d'une composition à base d'une zéolite et contenant du carbonate de calcium.

Le brevet US-A-4256587 décrit un absorbant siliceux choisi parmi du résidu filtré de kaolin, la terre de diatomée, des cendres volantes et de la silice en poudre.

La présente invention a notamment pour but de fournir un moyen permettant une captation (ou élimination) efficace des cations de métaux lourds et ne présentant pas les inconvénients sus-mentionnés.

A cet effet, la présente invention propose un nouvel agent de captation (ou élimination) de cations de métaux lourds présents dans un milieu, ledit agent étant un produit minéral comprenant au moins un composéconsistant en un silicate de métal alcalin, au moins un composé consistant en un carbonate de métal alcalin ou un hydroxycarbonate choisi parmi l'hydrotalcite et la dawsonite et, de préférence, au moins un support, en particulier une argile.

Elle est également relative à un agent de stabilisation (ou immobilisation) desdits cations de métaux lourds comprenant ledit agent de captation.

La Demanderesse a trouvé, de manière surprenante, que l'utilisation d'un agent de captation de cations de métaux lourds tel que défini précédemment permettait une élimination très efficace desdits cations du milieu les contenant et, de manière avantageuse, une amélioration de la décantation et de la séparation boue obtenue/ surnageant liquide, une amélioration de l'aptitude à la stabilisation de cette boue, c'est-à-dire une amélioration de l'aptitude de celle-ci à la résistance à la lixiviation et une diminution nette de la teneur résiduelle en calcium du précipité par rapport à ce qui est obtenu avec le procédé classique décrit précédemment.

Ainsi, l'un des objets de l'invention est un agent de captation (ou élimination) de cations de métaux lourds contenus dans un milieu, caractérisé en ce que ledit agent comprend :
- au moins un composé consistant en un silicate de métal alcalin, appelé ci-après composé A ; et
- au moins un composé consistant en un carbonate de métal alcalin ou un hydroxycarbonate choisi parmi l'hydrotalcite et la dawsonite, appelé ci-après composé B.

Par cations de métaux lourds, on entend en particulier les cations métalliques de valence supérieure ou égale à 2, de préférence égale à 2, et notamment ceux choisis parmi l'antimoine, l'arsenic, le bismuth, le cadmium, le chrome, le cobalt, le cuivre, l'étain, le manganèse, le molybdène, le nickel, l'or, le plomb, le thallium, le tungstène, le zinc, l'aluminium, le fer, les métaux de la famille des actinides.

Les cations de métaux lourds plus particulièrement visés par la présente invention sont le cadmium, le chrome, le cuivre, le nickel, le plomb, le zinc, l'aluminium et le fer.

Ledit milieu peut être, de préférence, liquide.

Ce milieu peut être ainsi constitué par un effluent aqueux, notamment par les eaux de lavage (ou d'épuration) des fumées d'incinération de déchêts, notamment d'ordures ménagères, de déchêts industriels, de déchêts hospitaliers, par les eaux de lavage de matière solide, comme de la terre, contenant des métaux lourds, par des effluents aqueux de traitement de surface.

Le produit minéral pour capter (ou éliminer) les cations de métaux lourds contenus dans un milieu selon l'invention, utilisable pour purifier ledit milieu, comprend donc au moins un principe actif (ou agent de précipitation) constitué par au moins un composé A et au moins un composé B.

Le composé A est un silicate de métal alcalin, notamment de sodium ou de potassium.

De manière avantageuse, le composé A est un silicate de sodium.

Ledit silicate de sodium présente alors en général un rapport molaire SiO₂/Na₂O compris entre 0,5 et 3,8.

Le composé B est un carbonate de métal alcalin ou un hydroxycarbonate choisi parmi l'hydrotalcite et la dawsonite.

L'hydrotalcite est un carbonate basique de magnésium et d'aluminium. La dawsonite est un carbonate basique d'aluminium et de sodium.

De manière avantageuse, le composé B est un carbonate de métal alcalin, préférentiellement de sodium.

Le rapport en moles entre le composé B et le composé A peut varier dans des plages de valeurs assez larges. En général, ce rapport, exprimé par le rapport en moles CO₃²⁻/SiO_{2,}, est compris entre 0,05 et 10, de préférence entre 0,33 et 3.

L'agent selon l'invention peut se présenter sous la forme d'une poudre ou d'un granulé.

Selon un mode préféré de réalisation de l'invention, l'agent selon l'invention comprend aussi au moins un support (ou substrat).

On peut alors considérer l'agent selon l'invention comme un produit composite formé:
- d'au moins un principe actif (ou agent de précipitation) constitué par au moins un composé A et au moins un composé B, et
- d'au moins un support (ou substrat), de préférence constitué par au moins une argile.

Ce produit (minéral) composite se présente généralement sous forme de poudre.

Le support alors contenu dans l'agent selon l'invention est, de manière préférée, une argile.

L'argile alors contenue dans l'agent selon l'invention peut être d'origine naturelle ou synthétique.

L'argile employée dans l'agent selon l'invention présente avantageusement une teneur pondérale élevée en Al₂O₃ ; cette teneur est par exemple comprise entre 20 et 40 %.

On préfère, selon l'invention, mettre en oeuvre une argile de structure lamellaire ou phyllosilicate.

On peut ainsi utiliser une argile choisie dans le groupe comprenant les kaolinites, les serpentines.

L'argile peut également être choisie dans le groupe comprenant les montmorillonites, les bentonites (en particulier alcalines), le talc, le mica.

De préférence, l'argile choisie appartient à l'un de ces deux groupes.

On peut éventuellement employer une argile de structure type chlorite.

L'agent selon le mode préféré de réalisation de l'invention contient en général, à titre d'argile, une montmorillonite.

La teneur en support, en particulier en argile, de l'agent selon le mode préféré de réalisation de l'invention est habituellement comprise entre 10 et 90 % en poids, par exemple entre 20 et 80 % en poids ou entre 10 et 30 % en poids, par rapport au poids total dudit agent.

De manière générale, l'agent selon l'invention présente une teneur en eau comprise entre 1 et 20 % en poids. Cette teneur en eau est déterminée par la mesure de perte de masse par calcination à 350 °C pendant 6 heures.

L'agent selon l'invention peut présenter une taille moyenne en masse des particules comprise entre 15 et 100 µm, par exemple entre 20 et 75 µm.

Les agents selon l'invention sont préparés par tout procédé adéquat.

Ainsi, selon une première variante, on peut effectuer, dans un premier temps, un mélange d'une solution aqueuse du composé A et soit d'une solution aqueuse du composé B, le pH de cette dernière pouvant être préalablement ajusté au pH de la première solution, par exemple par ajout d'une base, notamment de soude, soit du composé B solide.

La solution obtenue à partir de ce mélange est, généralement après avoir été soumise à une agitation, séchée, notamment par un procédé flash ou, de préférence, par atomisation.

Selon une deuxième variante, un mélange obtenu par addition d'une solution aqueuse du composé A au composé B solide ou par addition d'une solution aqueuse du composé B au composé A solide subit, éventuellement après avoir été soumis à une agitation, une granulation, à l'aide de tout type de granulateur connu, par exemple un granulateur à assiettes. Cette granulation est habituellement complétée par un séchage, de préférence en lit fluide.

Le pH de la solution aqueuse du composé A est habituellement compris entre 10 et 14.

Dans le cas où le composé A est un silicate de sodium, on emploie en général une solution aqueuse de silicate de sodium présentant un rapport molaire SiO₂/Na₂O compris entre 0,5 et 3,8 et une concentration en silicate, exprimée en SiO₂, comprise entre 0,1 et 10 mol/l, par exemple entre 0,2 et 8 mol/l.

Dans le cas où le composé B est un carbonate de sodium, on emploie en général une solution aqueuse de carbonate de sodium de concentration en carbonate, exprimée en Na₂CO₃, comprise entre à 0,1 et 5 mol/l, par exemple entre 0,2 et 3 mol/l.

L'opération d'agitation est généralement effectuée pendant une durée comprise entre 5 et 45 minutes, par exemple entre 10 et 25 minutes.

L'étape de séchage est habituellement mise en oeuvre à une température comprise entre environ 40 et 500 °C, à l'aide de tout dispositif adéquat.

Le séchage peut se faire par atomisation, notamment dans la première variante.

A cet effet, on peut employer tout type d'atomiseur convenable, notamment un atomiseur du type BUCHI, un atomiseur à turbines, à buses, à pression liquide ou à deux fluides.

La température d'entrée est généralement d'environ 230 à 250 °C dans le cas d'un atomiseur du type BUCHI et de l'ordre de 450 °C dans le cas d'un atomiseur à turbines ou à buses ; de même, la température de sortie est habitiellement d'environ 110 à 140 °C dans le cas d'un atomiseur du type BUCHI et de l'ordre de 125 °C dans le cas d'un atomiseur à turbines ou à buses.

On peut également utiliser, pour le séchage, un dispositif tel que celui décrit dans le brevet US 4970030, dispositif dans lequel, en général, la température d'entrée est de l'ordre de 500 °C et la température de sortie de l'ordre de 150 °C (procédé flash).

Le séchage peut se faire en lit fluide, notamment dans la deuxième variante.

Dans le cas où l'on souhaite préparer un agent selon l'invention contenant un support, en particulier une argile, on peut opérer, selon une première variante, comme exposé ci-dessus, le support étant de préférence additionné au mélange de la solution aqueuse du composé A et soit de la solution aqueuse du composé B, le pH de cette dernière pouvant être préalablement ajusté au pH de la première solution, par exemple par ajout d'une base, notamment de soude, soit du composé B solide. Cette addition est habituellement effectuée lors de l'agitation dudit mélange, c'est-à-dire que le mélange est soumis à une agitation avant, pendant et après l'ajoût du support.

De même, selon une deuxième variante, on additionne, généralement sous agitation, à un support, en particulier une argile, préalablement introduit dans un granulateur, soit un mélange d'une solution aqueuse du composé A et d'une solution aqueuse du composé B, soit dans un premier temps une solution aqueuse du composé A (respectivement B) puis une solution aqueuse du composé B (respectivement A). La granulation peut s'effectuer à l'aide, par exemple, d'un granulateur à assiettes et est habituellement complétée par un séchage, de préférence en lit fluide.

On obtient en fin de préparation (dans ces deux variantes) un produit dans lequel le principe actif est, de manière avantageuse, intimement lié au support.

La mise en oeuvre d'au moins un agent selon l'invention pour éliminer les cations de métaux lourds d'un milieu les contenant, notamment d'un effluent (ou solution) liquide, en particulier d'un effluent (ou solution) aqueuse peut être effectuée de la manière suivante :

On introduit l'agent selon l'invention dans l'effluent liquide à traiter, sous agitation. Le pH final de la suspension contenant ledit agent est de préférence compris entre 7 et 12 ou ajusté à une valeur comprise entre 7 et 12 par addition d'une base ou d'un acide ; ledit pH peut être en particulier (ajusté) aux environs de 9. Le pH final dépend de la quantité d'agent selon l'invention introduit dans l'effluent liquide à traiter et du pH initial dudit effluent. On poursuit l'agitation, par exemple pendant 5 à 60 minutes. On laisse ensuite reposer (décanter), à température ambiante, la suspension pendant un certain temps, en général entre 0,5 et 24 heures, notamment entre 0,5 et 6 heures. Le temps de décantation peut être réduit si on utilise des méthodes de décantation rapides connues de l'homme du métier. Puis, on sépare le précipité formé, c'est-à-dire l'agent selon l'invention chargé en cations de métaux lourds, par décantation, filtration et/ou centrifugation de la suspension.

Généralement, le milieu à traiter, notamment quand il consiste en un effluent liquide (en particulier un effluent (une solution) aqueux), contient 0,5 à 6000 mg/l, par exemple 1 à 1000 mg/l, notamment 2 à 100 mg/l de cations de métaux lourds.

La quantité d'agent selon l'invention ajouté au milieu à traiter est telle que le rapport molaire (SiO₂+CO₃²⁻)/(cations présents dans le milieu à traiter) soit, en général, compris entre 0,7 et 2,5, par exemple entre 1,0 et 2,2, notamment entre 1,1 et 1,9. On entend ici par cations présents dans le milieu à traiter les cations de métaux lourds et les cations Ca²⁺.

L'utilisation des agents selon l'invention permet, de manière avantageuse, une élimination très efficace des cations de métaux lourds, notamment dans une plage de valeurs de pH assez large, en général entre 7 et 12.

De plus, on constate que, après séparation, le précipité formé, c'est-à-dire l'agent selon l'invention chargé en cations de métaux lourds, présente une bonne aptitude à la stabilisation (ou immobilisation). Il présente un comportement très satisfaisant vis-à-vis de la lixiviation : il est en effet très peu lixiviable, c'est-à-dire qu'il ne libère quasiment pas ou très peu de cations de métaux lourds qu'il contient lorsqu'il est mis en présence d'eau ; les quantités d'espèces chimiques cations de métaux lourds dans des lixiviats obtenus à partir de tests de lixiviation classiquement réalisés sont très faibles.

Ainsi, un autre objet de l'invention consiste en un agent de stabilisation (ou immobilisation) de cations de métaux lourds contenus dans un milieu, caractérisé en ce qu'il comprend au moins un agent tel que décrit précédemment.

Si la présence d'un support dans l'agent selon l'invention permet, en général, une précipitation localisée en périphérie dudit support, elle permet également, en particulier dans le cas de l'argile, de favoriser, de manière surprenante, la décantation, notamment d'augmenter la vitesse de décantation. De même, elle peut également permettre de diminuer les très faibles teneurs en cations de métaux lourds des lixiviats tels que mentionnés précédemment.

Les exemples suivants illustrent l'invention sans toutefois en limiter la portée.

### EXEMPLE 1

On mélange :
- 400 ml d'une solution aqueuse de silicate de sodium de rapport molaire SiO₂/Na₂O égal à 1, de concentration en silicate, exprimée en SIO₂, de 0,21 mol/l et de pH égal à 13, et
- une solution aqueuse de carbonate de sodium obtenue en dissolvant 8,84 grammes de Na₂CO₃ dans 400 ml d'eau, solution dont le pH est préalablement ajusté à 13 par ajout de soude.

La solution obtenue à partir de ce mélange est, après avoir été soumise à une agitation, séchée à l'aide d'un atomiseur du type BUCHI.

Le débit est de 20 ml/mn ; la température d'entrée est fixée à 240 °C, la température de sortie à 110 °C.

Le produit obtenu contient du silicate de sodium et du carbonate de sodium ; il présente un rapport CO₃²⁻/SiO₂ de 1 et une teneur en eau de 7 % en poids.

### EXEMPLE 2

On mélange :
- 657,5 ml d'une solution aqueuse de silicate de sodium de rapport molaire SiO₂/Na₂O égal à 3,3, de concentration en silicate, exprimée en SiO₂, de 2 mo/l et de pH égal à 12,5, et
- une solution aqueuse de carbonate de sodium obtenue en dissolvant 139,5 grammes de Na₂CO₃ dans 600 ml d'eau, solution dont le pH est préalablement ajusté à 12,5 par ajout de soude et dont le volume est ensuite porté à 657,5 ml par addition d'eau.

La solution obtenue à partir de ce mélange est, après avoir été soumise à une agitation, séchée à l'aide d'un atomiseur du type BUCHI.

Le débit est de 20 ml/mn ; la température d'entrée est fixée à 235 °C et la température de sortie à 120 °C.

Le produit obtenu contient du silicate de sodium et du carbonate de sodium ; il présente un rapport CO₃²⁻/SiO₂ de 1 et une teneur en eau de 10 % en poids.

### EXEMPLE 3

On mélange :
- 400 ml d'une solution aqueuse de silicate de sodium de rapport molaire SiO₂/Na₂O égal à 1, de concentration en silicate, exprimée en SiO₂, de 0,21 mo/l et de pH égal à 13, et
- une solution aqueuse de carbonate de sodium obtenue en dissolvant 8,84 grammes de Na₂CO₃ dans 400 ml d'eau, solution dont le pH est préalablement ajusté à 13 par ajout de soude.

La solution obtenue à partir de ce mélange est soumise à une agitation.

Puis 75 grammes d'argile montmorillonite y sont ajoutés, toujours sous agitation.

L'agitation est poursuivie pendant 15 minutes.

La suspension obtenue est enfin séchée à l'aide d'un atomiseur du type BUCHI.

Le débit est de 10 ml/mn ; la température d'entrée est fixée à 240 °C, la température de sortie à 130 °C.

Le produit obtenu contient du silicate de sodium, du carbonate de sodium et de l'argile montmorillonite ; il présente un rapport CO₃²⁻/SiO₂ de 1, une teneur en argile montmorillonite de 75 % en poids et une teneur en eau de 6 % en poids.

### EXEMPLE 4

On introduit, sous agitation, dans 100 ml d'une solution de CuCl₂ ayant une concentration en Cu²⁺ de 48 mg/l, 18 mg du produit préparé dans l'exemple 1, quantité correspondant à un rapport molaire (SiO₂+CO₃²⁻)/Cu²⁺ d'environ 2,1 et on maintient l'agitation pendant 30 minutes.

Le pH de la suspension obtenue est égal à 9,7.

La suspension est ensuite laissée au repos, à température ambiante, pendant 4 heures.

Puis elle est centrifugée à 3000 tours/mn pendant 5 minutes.

Le surnageant présente alors une concentration en Cu²⁺, mesurée par absorption atomique, inférieure à 2 mg/l.

### EXEMPLE 5

On introduit, sous agitation, dans 100 ml d'une solution de ZnSO₄ ayant une concentration en Zn²⁺ de 51 mg/l, 18 mg du produit préparé dans l'exemple 1, quantité correspondant à un rapport molaire (SiO₂+CO₃²⁻)/Zn^{2 +} d'environ 1,8 et on maintient l'agitation pendant 30 minutes.

Le pH de la suspension obtenue est égal à 8,2.

La suspension est ensuite laissée au repos, à température ambiante, pendant 4 heures.

Puis elle est centrifugée à 3000 tours/mn pendant 5 minutes.

Le surnageant présente alors une concentration en Zn^{2 +}, mesurée par absorption atomique, égale à 1,5 mg/l.

### EXEMPLE 6

On introduit, sous agitation, dans 100 ml d'une solution de CdCl₂ ayant une concentration en Cd²⁺ de 88 mg/l, 18 mg du produit préparé dans l'exemple 1, quantité correspondant à un rapport molaire (SiO₂+CO₃²⁻)/Cd²⁺ d'environ 1,8 et on maintient l'agitation pendant 30 minutes.

Le pH de la suspension obtenue est égal à 10.

La suspension est ensuite laissée au repos, à température ambiante, pendant 4 heures.

Puis elle est centrifugée à 3000 tours/mn pendant 5 minutes.

Le surnageant présente alors une concentration en Cd²⁺, mesurée par absorption atomique, inférieure à 0,5 mg/l.

### EXEMPLE 7

Un effluent aqueux contenant des cations Fe³⁺, Al³⁺, Ca²⁺, Zn²⁺, Pb²⁺, Cd²⁺ est reconstitué comme suit :

On dissout dans 1 litre d'acide chlorhydrique 0,01 M les quantités suivantes :

| | |
|---|---|
| CaCl₂,2H₂O : 7,33 g | ZnCl₂ : 3,12 g |
| FeCl₃,6H₂O : 0,483 g | PbCl₂ : 0,737 g |
| AlCl₃,6H₂O : 0,994 g | 3CdSO₄,8H₂O : 0,068 g |

On porte le volume à 2 litres par addition d'eau.

Le pH de l'effluent obtenu est de 1,3.

Ledit effluent présente les teneurs suivantes exprimées en mg/l :

| | |
|---|---|
| Ca²⁺ : 1070 | Zn²⁺ : 712 |
| Al³⁺ : 52,8 | Pb²⁺ : 274 |
| Fe³⁺ : 50,9 | Cd²⁺ : 5 |

On introduit, sous agitation, dans 250 ml dudit effluent, 1,745 g du produit préparé dans l'exemple 1 et on maintient l'agitation pendant 30 minutes.

Le pH de la suspension obtenue est de 9,2.

La suspension est ensuite laissée au repos, à température ambiante, pendant 4 heures.

Puis elle est centrifugée à 3000 tours/mn pendant 10 minutes.

On mesure les concentrations suivantes en Ca²⁺, Al³⁺, Fe³⁺, Zn²⁺, Pb²⁺ et Cd²⁺ du surnageant, exprimées en mg/l :

| | |
|---|---|
| Ca²⁺ : 85 | Zn²⁺ : 1 |
| Al³⁺ : <0,1 | Pb²⁺ : < 0,01 |
| Fe³⁺ : < 0,1 | Cd²⁺ : 0,07 |

### EXEMPLE 8

On introduit, sous agitation, dans 2 litres d'une solution de ZnCl₂ ayant une concentration en Zn²⁺ de 1g/l, 7,282 grammes du produit préparé dans l'exemple 2, quantité correspondante à un rapport molaire (SiO₂+CO₃²⁻)/Zn²⁺ d'environ 1,9 et on maintient l'agitation pendant 30 minutes.

Le pH de la suspension obtenue est égal à 9,35.

Puis elle est centrifugée à 3000 tours/mn pendant 10 minutes.

Le surnageant présente une concentration en Zn²⁺, mesurée par absorption atomique, de 1,2 mg/l.

Le précipité est séché à température ambiante. Sa masse est de 6,36 grammes.

A 2 grammes dudit précipité sont ajoutés 32 ml d'eau. La suspension obtenue est mise sous agitation.

Le pH est ajusté à la valeur 7 par ajout de 1,4 ml d'une solution d'acide acétique 0,5 N.

On porte ensuite le volume à 40 ml par addition d'eau.

La suspension est ensuite agitée pendant 20 heures puis filtrée.

Le filtrat présente une faible concentration en Zn²⁺, en l'occurrence 5,5 mg/l : le précipité est donc peu lixiviable.

### EXEMPLE 9

On introduit, sous agitation, dans 2 litres d'une solution de PbCl₂ ayant une concentration en Pb²⁺ de 1g/l, 1,728 gramme du produit préparé dans l'exemple 2, quantité correspondante à un rapport molaire (SiO₂+CO₃²⁻)/Pb²⁺ d'environ 1,4 et on maintient l'agitation pendant 30 minutes.

Le pH de la suspension obtenue est égal à 9,5.

Puis elle est centrifugée à 3000 tours/mn pendant 10 minutes.

Le surnageant présente une concentration en Pb²⁺, mesurée par absorption atomique, de 0,1 mg/l.

Le précipité est séché à température ambiante. Sa masse est de 2,23 grammes.

A 1,5 gramme dudit précipité sont ajoutés 24 ml d'eau. La suspension obtenue est mise sous agitation.

Le pH est ajusté à la valeur 7 par ajout de 0,1 ml d'acide acétique 0,5 N.

On porte ensuite le volume à 30 ml par addition d'eau.

La suspension est ensuite agitée pendant 20 heures, puis filtrée.

Le filtrat présente une faible concentration de Pb²⁺, en l'occurrence 2 mg/l : le précipité est donc très peu lixiviable.

### EXEMPLE 10

On introduit, sous agitation, dans 100 ml d'une solution de CuCl₂ ayant une concentration en Cu²⁺ de 50 mg/l, 80 mg du produit préparé dans l'exemple 3, quantité correspondant à un rapport molaire (SiO₂+CO₃²⁻)/Cu²⁺ d'environ 1,7 et on maintient l'agitation pendant 30 minutes.

Le pH de la suspension obtenue est amené à 8 par addition de 0,1 ml d'acide chlorhydrique 0,5 N.

La suspension est ensuite laissée au repos, à température ambiante, pendant 4 heures.

Puis elle est centrifugée à 3000 tours/mn pendant 5 minutes.

Le surnageant présente alors une concentration en Cu²⁺, mesurée par absorption atomique inférieure à 2 mg/l.

### EXEMPLE 11

On introduit, sous agitation, dans 100 ml d'une solution de CuCl₂ ayant une concentration en Cu²⁺ de 50 mg/l, 80 mg du produit préparé dans l'exemple 3, quantité correspondant à un rapport molaire (SiO₂+CO₃²⁻)/Cu²⁺ d'environ 1,7 et on maintient l'agitation pendant 30 minutes.

Le pH de la suspension obtenue est amené à 12 par addition de 0,5 ml de soude 1 N.

La suspension est ensuite laissée au repos, à température ambiante, pendant 4 heures.

Puis elle est centrifugée à 3000 tours/mn pendant 5 minutes.

Le surnageant présente alors une concentration en Cu²⁺, mesurée par absorption atomique inférieure à 2 mg/l.

### EXEMPLE 12 (comparatif)

A 830 ml d'une solution aqueuse de silicate de sodium de rapport molaire SiO₂/Na₂O égal à 1, de concentration en silicate, exprimée en SiO₂, de 0,2 mol/l, on additionne, sous agitation, 75 grammes d'argile montmorillonite.

L'agitation est poursuivie pendant 15 minutes.

La suspension obtenue est enfin séchée à l'aide d'un atomiseur du type BUCHI.

Le débit est de 10 ml/mn ; la température d'entrée est fixée à 240 °C, la température de sortie à 135 °C.

Le produit obtenu contient du silicate de sodium et 72 % en poids d'argile montmorillonite ; il présente une teneur en eau de 9 % en poids.

### EXEMPLE 13

On compare ici les vitesses de décantation obtenues lors de l'utilisation des produits préparés dans les exemples 1, 3 (produits selon l'invention) et 12 (produit non conforme à l'invention) pour épurer une solution contenant des cations de métaux lourds, ici des cations Cu²⁺.
(1) On introduit dans 100 ml d'une solution de CuCl₂ ayant une concentration en Cu²⁺ de 500 mg/l, 180 mg du produit préparé dans l'exemple 1 et on amène le pH à 8 par addition de 0,5 ml d'acide chlorhydrique 0,5 N.
(2) On introduit dans 100 ml d'une solution de CuCl₂ ayant une concentration en Cu²⁺ de 500 mg/l, 803 mg du produit préparé dans l'exemple 3 et on amène le pH à 8 par addition de 1,5 ml d'acide chlorhydrique 0,5 N.
(3) On introduit dans 100 ml d'une solution de CuCl₂ ayant une concentration en Cu²⁺ de 500 mg/l, 803 mg du produit préparé dans l'exemple 12 et on amène le pH à 8 par addition de 3 ml d'acide chlorhydrique 0,5 N.

Après une agitation pendant 1 minute, chacune des suspensions obtenues en (1), (2) et (3) est versée dans des éprouvettes graduées.

On compare les vitesses de décantation.

Le tableau suivant indique, pour chaque produit préparé dans les exemples 1, 3 et 12, le volume total décanté (en ml) à divers temps de la décantation (en minutes) :

| Exemples | Temps de décantation (mn) | | | | | | |
|---|---|---|---|---|---|---|---|
| | 0 | 5 | 10 | 20 | 40 | 60 | 85 |
| 1 | 0 | 2 | 7 | 20 | 40 | 55 | 65 |
| 3 | 0 | 18 | 48 | 62 | 69 | 72 | 75 |
| 12 | 0 | 1 | 5 | 15 | 31 | 45 | 54 |

La vitesse de décantation la plus élevée est obtenue avec le produit selon l'invention préparé dans l'exemple 3 (composite silicate-carbonate / argile).

La vitesse de décantation la plus faible est obtenue avec le produit non conforme à l'invention préparé dans l'exemple 12.

## Revendications

1. Agent de captation de cations de métaux lourds contenus dans un milieu, caractérisé en ce que ledit agent comprend :
- au moins un composé A consistant en un silicate de métal alcalin ; et
- au moins un composé B consistant en un carbonate de métal alcalin ou un hydroxycarbonate choisi parmi l'hydrotalcite et la dawsonite.

2. Agent selon la revendication 1, caractérisé en ce que ledit composé A est un silicate de sodium ou de potassium.

3. Agent selon la revendication 2, caractérisé en ce que ledit composé A est un silicate de sodium présentant un rapport molaire SiO₂/Na₂O compris entre 0,5 et 3,8.

4. Agent selon l'une des revendications 1 à 3, caractérisé en ce que ledit composé B est un carbonate de métal alcalin.

5. Agent selon la revendication 4, caractérisé en ce que ledit composé B est un carbonate de sodium.

6. Agent selon l'une des revendications 1 à 5, caractérisé en ce que le rapport en moles composé B/composé A, exprimé par le rapport en moles CO₃²⁻/SiO₂, est compris entre 0,05 et 10.

7. Agent selon l'une des revendications 1 à 6, caractérisé en ce qu'il comprend en outre au moins un support consistant en une argile.

8. Agent selon la revendication 7, caractérisé en ce qu'il présente une teneur en support comprise entre 10 et 90 % en poids.

9. Agent selon l'une des revendications 7 et 8, caractérisé en ce que ledit support est une argile d'origine naturelle ou synthétique.

10. Agent selon l'une des revendications 7 à 9, caractérisé en ce que ladite argile est une montmorillonite.

11. Agent selon l'une des revendications 1 à 10, caractérisé en ce qu'il présente une taille moyenne des particules en masse comprise entre 15 et 100 µm.

12. Agent de stabilisation de cations de métaux lourds contenus dans un milieu, caractérisé en ce qu'il comprend au moins un agent selon l'une des revendications 1 à 11.

13. Agent selon l'une des revendications 1 à 12, caractérisé en ce que ledit milieu est un effluent aqueux.

14. Agent selon la revendication 13, caractérisé en ce que ledit effluent aqueux est constitué par les eaux de lavage des fumées d'incinération de déchêts.

## Patentansprüche

1. Einfangmittel für in einem Milieu enthaltenen Schwermetallkationen, dadurch gekennzeichnet, daß das genannte Mittel umfaßt:
- mindestens eine Verbindung A, bestehend aus einem Alkalimetallsilicat; und
- mindestens eine Verbindung B, bestehend aus einem Alkalimetallcarbonat oder einem Hydroxycarbonat, ausgewählt unter Hydrotalcit und Dawsonit.

2. Mittel nach Anspruch 1, dadurch gekennzeichnet, daß die genannte Verbindung A ein Silicat von Natrium oder Kalium ist.

3. Mittel nach Anspruch 2, dadurch gekennzeichnet, daß die genannte Verbindung A ein Natriumsilicat ist, das ein molares Verhältnis SiO₂/Na₂O zwischen 0,5 und 3,8 aufweist.

4. Mittel nach einem der Ansprüche 1 bis 3, dadurch gekennzeichnet, daß die genannte Verbindung B ein Alkalimetallcarbonat ist.

5. Mittel nach Anspruch 4, dadurch gekennzeichnet, daß die genannte Verbindung B ein Natriumcarbonat ist.

6. Mittel nach einem der Ansprüche 1 bis 5, dadurch gekennzeichnet, daß das Verhältnis in Molen Verbindung B/Verbindung A, ausgedrückt im Verhältnis in Molen CO₃²⁻/SiO₂ zwischen 0,05 und 10 liegt.

7. Mittel nach einem der Ansprüche 1 bis 6, dadurch gekennzeichnet, daß es außerdem mindestens einen aus einem Ton bestehenden Träger umfaßt.

8. Mittel nach Anspruch 7, dadurch gekennzeichnet, daß es einen Gehalt an Träger zwischen 10 Gew.-% und 90 Gew.-% aufweist.

9. Mittel nach einem der Ansprüche 7 und 8, dadurch gekennzeichnet, daß der genannte Träger ein Ton natürlichen oder synthetischen Ursprungs ist.

10. Mittel nach einem der Ansprüche 7 bis 9, dadurch gekennzeichnet, daß der genannte Ton ein Montmorrilonit ist.

11. Mittel nach einem der Ansprüche 1 bis 10, dadurch gekennzeichnet, daß es eine mittlere Teilchengröße in Masse zwischen 15 µm und 100 µm aufweist.

12. Mittel zur Stabilisierung von in einem Milieu enthaltenen Schwermetallkationen, dadurch gekennzeichnet, daß es mindestens ein Mittel nach einem der Ansprüche 1 bis 11 umfaßt.

13. Mittel nach einem der Ansprüche 1 bis 12, dadurch gekennzeichnet, daß das genannte Milieu ein Abwasser ist.

14. Mittel nach Anspruch 13, dadurch gekennzeichnet, daß das genannte Abwasser aus Waschwässern des Rauches aus der Abfallverbrennung besteht.

## Claims

1. An agent for recovering heavy metal cations contained in a medium, characterized in that said agent comprises:
• at least one compound A consisting of an alkali metal silicate; and
• at least one compound B consisting of an alkali metal carbonate or a hydroxycarbonate selected from hydrotalcite and dawsonite.

2. An agent according to claim 1, characterized in that said carbon A is a sodium or potassium silicate.

3. An agent according to claim 2, characterized in that said compound A is a sodium silicate with an SiO₂/Na₂O mole ratio in the range 0.5 to 3.8.

4. An agent according to any one of claims 1 to 3, characterized in that said compound B is an alkali metal carbonate.

5. An agent according to claim 4, characterized in that said compound B is a sodium carbonate.

6. An agent according to any one of claims 1 to 5, characterized in that the compound B/compound A mole ratio, expressed as the CO₃²⁻/SiO₂ mole ratio, is in the range 0.05 to 10.

7. An agent according to any one of claims 1 to 6, characterized in that it further comprises at least one support consisting of a clay.

8. An agent according to claim 7, characterized in that the support is present in an amount in the range 10% to 90% by weight.

9. An agent according to claim 7 or claim 8, characterized in that said support is a clay of natural or synthetic origin.

10. An agent according to any one of claims 7 to 9, characterized in that said clay is a montmorillonite.

11. An agent according to any one of claims 1 to 10, characterized in that the mass average particle size is in the range 15 to 100 µm.

12. An agent for stabilising heavy metal cations contained in a medium, characterized in that it comprises at least one agent according to any one of claims 1 to 11.

13. An agent according to any one of claims 1 to 12, characterized in that said medium is an aqueous effluent.

14. An agent according to claim 13, characterized in that said aqueous effluent is constituted by wash water from waste incineration exhaust vapours.
